# EUROPÄISCHE PATENTSCHRIFT

(11) **EP 2 925 198 B1**
(45) Veröffentlichungstag und Bekanntmachung des Hinweises auf die Patenterteilung: **07.11.2018**
(21) Anmeldenummer: 13795777.5
(22) Anmeldetag: 27.11.2013
(51) Int. Cl.: B01F 15/00, B01F 15/06, A47J 43/07

(54) **KÜCHENMASCHINE**
KITCHEN MACHINE
MACHINE POUR LA CUISINE

(30) Priorität: 29.11.2012 DE 102012111602
(43) Veröffentlichungstag der Anmeldung: 07.10.2015
(73) Patentinhaber: Vorwerk & Co. Interholding GmbH, 42275 Wuppertal (DE)
(72) Erfinder: KOETZ, Hendrik, 5830 Wetter (DE)
(74) Vertreter: Müller, Enno
(86) Internationale Anmeldenummer: PCT/EP2013/074807
(87) Internationale Veröffentlichungsnummer: WO 2014/083029

(56) Entgegenhaltungen:
- CN-U- 202 051 534
- DE-A1-102010 060 650
- US-A1- 2007 081 696
- US-A1- 2011 120 316

## Beschreibung

Die Erfindung betrifft eine elektrisch betriebene Küchenmaschine mit einem Rührgefäß und einem Rührwerk in dem Rührgefäß.

Küchenmaschinen der in Rede stehenden Art sind bekannt, so beispielsweise aus der DE 102007059236 A1. Mittels solcher Küchenmaschinen ist die Bearbeitung von Lebensmitteln, darüber hinaus bei aufheizbaren Rührgefäßen das Garen von Speisen möglich, wozu insbesondere die auf das Rührgefäß beziehungsweise auf den Inhalt des Rührgefäßes einwirkende Heizleistung bevorzugt durch den Benutzer regelbar ist, wie auch bevorzugt die Drehrichtung und die Drehgeschwindigkeit des Rührwerkes in dem Rührgefäß, darüber hinaus gegebenenfalls auch die Zeitdauer der Einwirkung von Heizung und/oder Rührwerk.

Bekannt ist weiter, insbesondere die vorgenannten Parameter der Küchenmaschine durch elektrische beziehungsweise elektronische oder mechanische Stellmittel an der Küchenmaschine einzustellen, so beispielsweise mittels Drehschalter oder Taster. Auch ist in diesem Zusammenhang bekannt, der Küchenmaschine einen bevorzugt nicht flüchtigen Speicher zuzuordnen, der eine Rezeptauswahl anbietet. Eine solche Rezeptauswahl ist bevorzugt auf einem Display der Küchenmaschine anzeig- und auswählbar. Diesbezüglich wird auf die DE 102009055794 A1 oder auch die DE 102010060650 A1 verwiesen.

Wählt der Benutzer ein in der Küchenmaschine hinterlegtes Rezept aus, so werden bevorzugt die einzustellenden Parameter, wie gegebenenfalls Temperatur, Rührwerk-Drehzahl und Zeitdauer von dem Programm vorgegeben und, gegebenenfalls nach Bestätigung durch den Benutzer, selbsttätig eingestellt; sind darüber hinaus gegebenenfalls durch den Benutzer abänderbar.

Des Weiteren ist es im Stand der Technik beispielsweise aus den Veröffentlichungen US 2007/0081696 A1, US 2011/0120316 A1 und/oder CN 202051534 U bekannt, dass ein Küchengerät eine Gesichtserkennung durchführt, um bestimmten Nutzern das Durchführen einer Arbeitsroutine des Küchengerätes zu erlauben bzw. automatisch eine Arbeitsroutine zu veranlassen.

Ausgehend von dem vorbekannten Stand der Technik beschäftigt sich die Erfindung mit der Aufgabenstellung, eine hinsichtlich der Anwendung oder Benutzung vorteilhafte Küchenmaschine anzugeben.

Eine mögliche Lösung der Aufgabe ist nach einem ersten Erfindungsgedanken bei einer Küchenmaschine gegeben, bei welcher darauf abgestellt ist, dass die Küchenmaschine eine Kamera, insbesondere elektronische Kamera aufweist, welche potenziell in Richtung auf den Benutzer der Küchenmaschine gerichtet ist, und dass eine Gesichtserkennungssoftware sowie eine Gesichterdatenbank gespeichert sind und dass in Abhängigkeit einer Gesichtserkennung eine Arbeitsroutine der Küchenmaschine durchführbar ist, wobei durch die Gesichtserkennung die Freischaltung einer Sprachsteuerung der Küchenmaschine erfolgt und/oder wobei durch die Gesichtserkennung die Freischaltung einer Gestensteuerung der Küchenmaschine erfolgt.

Es ist vorgesehen, dass durch die Gesichtserkennung die Freischaltung einer Sprachsteuerung und/ oder einer Gestensteuerung der Küchenmaschine erfolgt. Die Gesichtserkennung dient hierbei in Form eines Zugangscodes für die Küchenmaschine, um diese nach Freischaltung gegebenenfalls allein durch Sprache oder Gesten zu steuern.

Wenn ein Benutzer durch die Gesichtserkennung von der Küchenmaschine identifiziert ist, kann die Küchenmaschine beispielsweise (zunächst) den Benutzer begrüßen. Einem in der Gesichterdatenbank hinterlegten Gesicht kann auch ein Name zugeordnet sein. Die Begrüßung kann entsprechend der Nutzung des Namens des erkannten Benutzers erfolgen.

Die Begrüßung kann aus einer auf einem Display erscheinenden Wortfolge bestehen. Die Begrüßung kann auch durch Sprachausgabe erfolgen. Die Begrüßung kann auch durch Akustiksignale erfolgen, beispielsweise eine Tonfolge.

Die Identifizierung eines Benutzers durch die Gesichtserkennung kann dazu genutzt sein, dass aus einer vorhandenen Rezeptdatenbank durch den identifizierten Benutzer ausgewählte und markierte, also bevorzugt Rezepte, als Rezeptvorschläge - zumindest vorrangig - ausgegeben werden. Es kann auch ein auf den identifizierten Benutzer abgestellte Anpassung der Rezeptdatenbank erfolgen. So können für den identifizierten Benutzer personalisierte Rezeptvorschläge durch die Küchenmaschine vorgenommen werden, zum Beispiel in Form der letzten fünf aufgerufenen Rezepte, insbesondere der letzten fünf durch den identifizierten Benutzer aufgerufenen Rezepte und/oder in Form einer vorher durch den identifizierten Benutzer oder im Hinblick auf den identifizierten Benutzer definierten Liste mit Lieblingsrezepten.

Unabhängig oder ergänzend zu der Gesichtserkennung kann bezüglich der von der Küchenmaschine ausgehenden Rezeptvorschläge auch eine Berücksichtigung der Tageszeit erfolgen. Abends können andere Rezepte vorgeschlagen werden als etwa morgens oder mittags.

In Bezug auf einen identifizierten Benutzer können auch Rezeptvorschläge erfolgen, die Diätvorschläge anbieten und/oder ärztlich verordnete Rezeptbestandteile. So kann zuvor eine Eingabe vorgenommen worden sein, die einem bestimmten Benutzer eine Diätempfehlung und/oder ärztlich verordnete Rezeptanteile zuordnet. In der Rezeptdatenbank oder einer hiermit zur Auswertung verbundenen weiteren Datenbank können beispielsweise auch Zutaten durch Hinterlegung identifiziert sein, die ein betreffender Benutzer nicht nutzen sollte oder nutzen darf. Somit können beispielsweise nur Rezeptvorschläge ausgegeben werden, in welchen diese Zutaten nicht verwendet sind.

Mit der in der Küchenmaschine eingebauten, bevorzugt in Richtung auf die übliche Position des Benutzers relativ zu der Küchenmaschine gerichtete Kamera wird kontinuierlich ein Bild aufgenommen. Befindet sich ein Benutzer in einem definierten Bildausschnitt und einer definierten Entfernung vor dem Gerät - bevorzugt 0,4 bis 2 m, weiter bevorzugt etwa 1 m - wird das Bild untersucht, das Gesicht extrahiert und mit einer vorher erstellten Gesichterdatenbank verglichen. Die Aufnahme erfolgt bevorzugt mit einer üblichen VGA-Kamera.

Der Vergleich einer mit der Kamera erstellten Aufnahme und den in der Gesichterdatenbank hinterlegten entsprechenden Daten ist erreicht mit einem in der Küchenmaschine integrierten Prozessor, wobei weiter bevorzugt die Gesichterdatenbank in einem nicht flüchtigen Speicher des Gerätes hinterlegt ist.

Die genannten Daten, insbesondere die Gesichterdatenbank, muss nicht notwendig in der Küchenmaschine selbst hinterlegt sein. Sie kann auch in einem mit der Küchenmaschine verbindbaren Speicher, etwa in Form eines USB-Sticks, der mit der Küchenmaschine verbindbar ist, hinterlegt sein. Sie kann auch in einem mit der Küchenmaschine in Funkverbindung befindlichen oder in Funkverbindung tretbaren Speicher, der sich in einem eigenen Rechner oder auch in einem Gerät für ein Mobiltelefon befinden kann, hinterlegt sein. Gleiches betrifft die Auswertungssoftware.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer weiter bevorzugten Ausgestaltung vorgesehen, dass durch die Gesichtserkennung die Freischaltung der Küchenmaschine erfolgt, so dass mit Erkennen eines in der Gesichterdatenbank vorhandenen, gegebenenfalls darüber hinaus markierten Gesichts erst die Küchenmaschine mit ihren Funktionen genutzt werden kann. Erst mit Erkennen eines Gesichts einer berechtigten Person ist in einer bevorzugten Ausgestaltung auch die manuelle Bedienung der Küchenmaschine, d.h. die Bedienung der einzelnen Stellelemente, wie Drehzahl-, Temperatur- und Zeitdauer-Steller möglich.

Auch können zugehörig zu den Gesichtern in der Gesichterdatenbank einzelne Funktionen der Küchenmaschine eingeschränkt oder deaktiviert sein, andere Funktion hingegen beispielsweise aktiviert sein, um so eine eingeschränkte Nutzung der Küchenmaschine zu erlauben.

Auch ist bevorzugt, dass die Gesichtserkennung mit Anschalten der Küchenmaschine aktiviert ist. Mit Aktivieren der Küchenmaschine, beispielsweise zufolge Betätigung eines Hauptschalters oder Einstecken eines Netzsteckers in die Netzsteckdose der hausseitigen Stromversorgung, befindet sich die Küchenmaschine bevorzugt in einem sogenannten Stand-By-Modus, in welchem die Gesichtserkennung zugleich aktiviert ist.

Alternativ wird die Gesichtserkennung, insbesondere aus einem Stand-by-Modus der Küchenmaschine heraus, erst nach einer Befehlseingabe aktiviert. Diese Befehlseingabe ist einer bevorzugten Ausgestaltung durch die Betätigung eines Stellelements der Küchenmaschine, beispielsweise eines Tasters oder Schalters, erreichbar. Auch kann diese Befehlseingabe über eine bevorzugt bidirektionale Sprachsteuerung erfolgen.

Zudem ist bevorzugt, dass die Gesichtserkennung nur durch Ausschalten der Küchenmaschine deaktivierbar ist, beispielsweise zufolge Betätigung des Hauptschalters in eine Aus-Stellung oder Trennen der netzseitigen Stromversorgung.

Ein Aufheizen und/oder ein Laufen des Rührwerkes wird in weiter bevorzugter Ausgestaltung nur durchgeführt, wenn Drehzahl, Temperatur und Zeitdauer vorgegeben werden oder auf einen diesbezüglichen Vorschlag der Küchenmaschine hin akzeptiert werden. Dies bedeutet, dass der Benutzer in einem Fall für alle drei Parameter Werte angeben muss, so insbesondere für die Drehzahl, die Temperatur und die Zeitdauer. Die Reihenfolge kann hierbei vorgegeben sein beziehungsweise durch eine Sprachausgabe der Küchenmaschine nacheinander abgefragt werden.

Alternativ, insbesondere bei Nutzung eines hinterlegten Rezepts, welches bevorzugt durch das Erkennen eines bekannten Gesichts aufgerufen wurde, kann über die Küchenmaschine eine akustische Ausgabe der entsprechend dem Rezept selbsttätig eingestellten Parameter, wie Drehzahl, Temperatur und Zeitdauer durch den Benutzer beispielsweise per Spracheingabe bestätigt werden.

Die hier vor- und nachstehend beschriebene Softwareauswertung braucht nicht notwendig in der Küchenmaschine vorgenommen zu werden. Sie kann auch durch beispielsweise Funkverbindung zu einem außerhalb der Küchenmaschine befindlichen Computer oder Handgerät, wie etwa Mobiltelefon durchgeführt werden. Sie kann auch in einem räumlich entfernten Computer ("Cloud") durchgeführt werden.

Nachstehend ist die Erfindung anhand der beigefügten Zeichnung erläutert, die aber lediglich ein Ausführungsbeispiel darstellt. Auf der Zeichnung zeigt:
- Fig. 1: in Ansicht eine Küchenmaschine der in Rede stehenden Art mit einem in einer Rührgefäßaufnahme aufgenommenen Rührgefäß, mechanischen Schaltern zur Einstellung von Stellgrößen sowie einem Display;

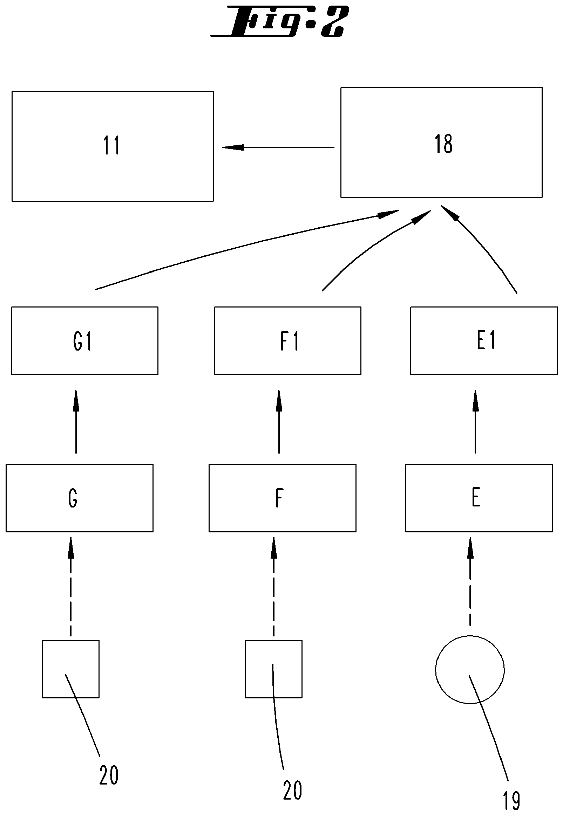

- Fig. 2: eine schematische Darstellung der zur Steuerung der Küchenmaschine 1 in dieser abgelegten Erkennungssoftware und Datenbanken;
- Fig. 3: ein Flussdiagramm zur Darstellung einer beispielhaften Bedienung der Küchenmaschine.

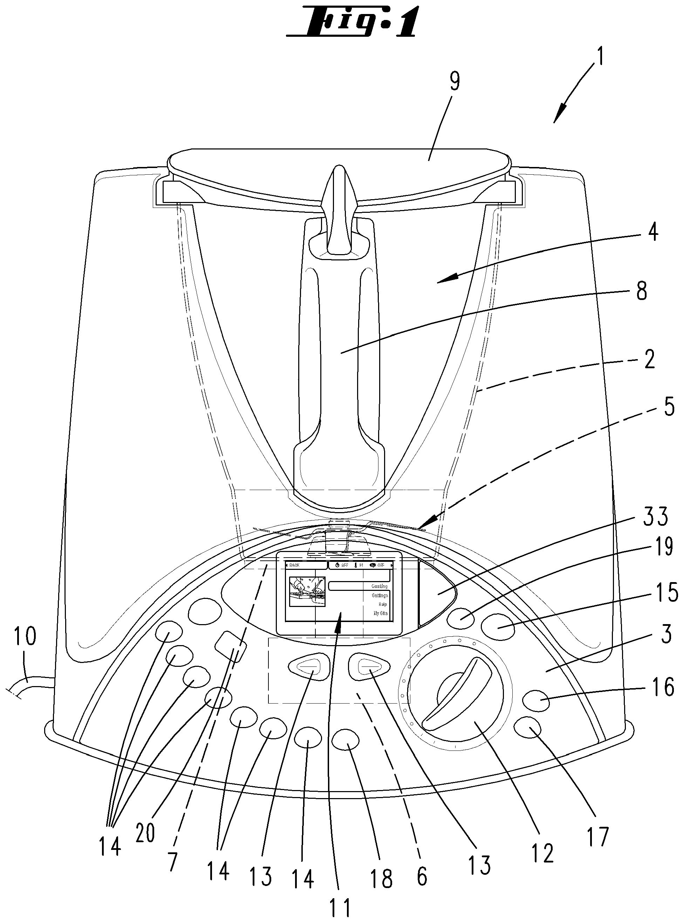

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk 5 verbleibt in dem Rührgefäß 4 auch bei Entnahme desselben aus der Rührgefäß-Aufnahme 2, wozu weiter bevorzugt das Rührwerk 5 in der Zuordnungsstellung über eine drehfeste Steckkupplung mit dem Elektromotor 6 verbunden ist.

Der Boden des Rührgefäßes 4 ist bevorzugt beheizbar zur Erhitzung eines in dem Rührgefäß 4 befindlichen Garguts. Bevorzugt kommt hier eine elektrische Widerstandsheizung 7 zum Einsatz, welche in dem Boden des Rührgefäßes 4 integriert ist.

Das Rührgefäß 4 ist bevorzugt topfartig mit im Wesentlichen kreisrundem Querschnitt ausgebildet, bei sich zur Topföffnung, d.h. nach oben hin konisch erweiterndem Querschnitt. Die Topfwandung besteht bevorzugt aus einem Metallwerkstoff.

Weiter weist das Rührgefäß 4 einen bevorzugt senkrecht ausgerichteten Haltegriff 8 auf, welcher beispielsweise sockelseitig sowie topfrandseitig an dem Rührgefäß 4 festgelegt ist.

Das Rührgefäß 4 wird der Küchenmaschine 1 bevorzugt derart zugeordnet, dass der Haltegriff 8 sich freistehend zwischen Gerätegehäuse-Backen, dem Bedienfeld 3 zugewandt, erstreckt, wobei der Sockelbereich des Rührgefäßes 4 sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung.

Auf das Rührgefäß 4 ist ein Gefäßdeckel 9 aufsetzbar, welcher im Betrieb der Küchenmaschine 1, weiter insbesondere bei Betrieb des Rührwerks 5 und/oder der bodenseitigen Widerstandsheizung 7, in einer aufgesetzten Stellung verriegelt ist, weiter bevorzugt an dem Gehäuse der Küchenmaschine 1. Zentral besitzt der Gefäßdeckel 9 eine nicht dargestellte Einfüllöffnung.

Die Elektroversorgung des Elektromotors 6 sowie der weiter bevorzugt rührgefäßbodenseitig vorgesehenen Heizung 7 und darüber hinaus auch der elektrischen Steuerung der gesamten Küchenmaschine 1 ist über ein Netzanschlusskabel 10 erreicht.

In dem Bedienfeld 3 ist zunächst bevorzugt ein Display 11 vorgesehen. Weiter bevorzugt trägt das Bedienfeld 3 einen oder mehrere mechanische Schalter und Regler zum Einstellen unterschiedlicher Stellgrößen für den Betrieb der Küchenmaschine 1. So ist bevorzugt zunächst ein Drehschalter 12 vorgesehen, zur Einstellung der Drehzahl des Rührwerks 5, wobei bevorzugt über den Drehschalter 12 Rührwerk-Drehzahlstufen angewählt werden und jeder Rührwerk-Drehzahlstufe eine vorgegebene Rührwerk-Drehzahl zugeordnet ist.

In dem dargestellten Ausführungsbeispiel sind weitere, bevorzugt unterhalb des Displays 11, zwei mechanische Schalter in Form von Tasten 13 vorgesehen. Hiermit kann eine Zeitdauer als Stellgröße eingegeben werden, über welche Zeitdauer bevorzugt das Rührwerk 5 und/oder die bodenseitige Heizung 7 des Rührgefäßes 4 aktiviert wird.

Darüber hinaus kann eine Reihe von mechanischen Schaltern in Form von Tasten 14 vorgesehen sein, über welche unterschiedliche, vorgegebene Temperaturen wählbar sind. Bevorzugt handelt es sich um Temperaturen im Bereich von 37°C bis hin zu 100°C. Mit der hierüber gewählten Temperatur und der gegebenenfalls über den Drehschalter 12 gewählten Rührwerk-Drehzahl wird das sich in dem Rührgefäß 4 befindliche Gargut über den mittels der Tasten 13 vorgegebenen Zeitraum mit Wärme beaufschlagt.

Zudem können in dem Bedienfeld 3 bevorzugt weitere Tasten zum Aufrufen hinterlegter Sonderfunktionen vorgesehen sein, so insbesondere eine Taste 15 zur Aktivierung einer Turbofunktion, bei welcher kurzzeitig, d.h. bevorzugt über einen Zeitraum von 1 bis 3 Sekunden, weiter bevorzugt über einen dem Zeitraum der Tastenbeaufschlagung entsprechenden Zeitraum, das Rührwerk 5 mit einer Höchstdrehzahl betrieben wird. So führt weiter bevorzugt die Turbofunktion zu einer kurzzeitigen Drehzahl des Rührwerks 5 von mehr als 10.000 U/min, weiter bevorzugt mehr als 12.000 U/min, bis hin zu beispielsweise 15.000 U/min.

Eine weitere Taste 16 dient bevorzugt zur Aktivierung einer Richtungsumkehrfunktion für das Rührwerk 5. Dreht das Rührwerk 5 im üblichen Betrieb bevorzugt im Rechtslauf, so ermöglicht die Taste 16 die Umschaltung auf einen Linkslauf. Die neue Drehrichtung kann bis zum Ablauf des über die Tasten 13 vorgegebenen Zeitraumes beibehalten werden. Weiter bevorzugt schaltet die Elektronik der Küchenmaschine 1 (dann) selbsttätig in die Standard-Drehrichtung zurück. Durch eine nochmalige Betätigung der Taste 16 während des Rührwerkbetriebs kann auch eine erneute Drehrichtungsumkehr durchführbar sein.

Zum Weiteren ist bevorzugt eine Taste 17 vorgesehen, zur Aktivierung einer Teigrührfunktion, welche insbesondere bei der Herstellung schwerer Hefe- und Brotteige zur Anwendung kommt.

Die über den Drehschalter 12 sowie über die Tasten 13 bis 17 einzustellenden Stellgrößen beziehungsweise aufzurufenden Funktionen sind bevorzugt in dem Display 11 anzeigbar.

In der Küchenmaschine 1 ist weiter bevorzugt eine Rezeptdatenbank 18 hinterlegt. Diese beinhaltet, bevorzugt kategorisiert, eine Mehrzahl von Rezepten zur Zubereitung in der Küchenmaschine 1. Jedem Rezept zugeordnet sind bevorzugt die Parameter beziehungsweise Stellgrößen bezüglich Drehzahl des Rührwerks 5, Temperatur der Widerstandsheizung 7 und Zeitdauer. Bevorzugt werden diese Stellgrößen mit Aktivierung des Rezeptablaufes selbsttätig durch die Küchenmaschine 1 eingestellt oder dem Benutzer zur Bestätigung vorgegeben.

Darüber hinaus können jedem Rezept beispielsweise Benutzer oder Benutzergruppen zugeordnet sein, so dass jeder Benutzer der Küchenmaschine 1 seine bevorzugten Rezepte quasi mit einem Knopfdruck aufrufen kann, ohne sich zeitaufwendig durch das Menü zu bewegen. Letzteres wird in üblicher Weise bevorzugt auf dem Display 11 angezeigt, welches Display 11 in einer Ausführungsform als Touchscreen ausgebildet sein kann.

Die Küchenmaschine 1 ist, bevorzugt auch ergänzend und parallel zu einer Bedienung über ein Akustiksignal, in üblicher Weise manuell bedienbar, so insbesondere zufolge Betätigung von Drehschalter 12 und Tasten 13 bis 17.

Bevorzugt wird die Küchenmaschine 1 zur Bedienung zunächst freigeschaltet, weiter bevorzugt allein durch eine oder mehrere berechtigte Personen.

Der Berechtigungsnachweis zur Freischaltung der Küchenmaschine und zur Aktivierung der Betriebsfunktionen der Küchenmaschine ist bevorzugt durch eine Sprachsteuerung und/oder eine Gestensteuerung und/oder eine Gesichtserkennung erreicht.

Hierzu weist die Küchenmaschine 1 weiter bevorzugt eine Spracherkennungssoftware E und/oder eine Gesichtserkennungssoftware F und/oder eine Gestenerkennungssoftware G auf. Weiter ist insbesondere im Bereich des Bedienfeldes 3 in Zusammenwirkung mit der Spracherkennungssoftware E ein Schallwandler 19 in Form eines Mikrofons angeordnet. Das Mikrofon, wie auch eine weiter bevorzugt vorgesehene elektronische Kamera 20, ist in dem Bedienfeld 3 potenziell in Richtung auf den Benutzer der Küchenmaschine 1 gerichtet. Die Kamera 20 dient zur Aufnahme von auswertbaren Bildern im Zusammenhang mit der Gesichtserkennungssoftware F und/ oder der Gestenerkennungssoftware G.

Bei der Spracherkennung wird bevorzugt das gesprochene Wort, insbesondere das Befehlswort beziehungsweise der daraus resultierende Schalldruck in elektrische Signale umgewandelt und von einem digitalen Signalprozessor verarbeitet und analysiert. Nach der kontinuierlichen Analyse der empfangenen Worte und dem Vergleich mit einer vorher definierten Wortliste innerhalb einer Befehlsdatenbank E₁ liefert der Signalprozessor das Wort mit der höchsten Wahrscheinlichkeit zurück, welches mit dem gesprochenen Wort übereinstimmt. Ein Mikrokontroller analysiert in einem weiteren Schritt das in Textform vorliegende Wort und übersetzt dieses in einen Maschinenbefehl oder in ein Rezept beziehungsweise setzt dies derart um, dass gezielt ein Rezept aus der Rezeptdatenbank 18 abgerufen und zumindest auf dem Display 11 angezeigt wird. In einer bevorzugten Weiterbildung führt die Übermittlung des Maschinenbefehls an die Rezeptdatenbank 18 dazu, dass die zu dem aufgerufenen Rezept oder Rezeptabschnitt zugehörigen Parameter, wie Drehzahl, Temperatur und Zeit automatisch voreingestellt werden.

Alternativ oder auch kombinativ zu der Spracherkennung wird unter Nutzung der in dem Bedienfeld 3 vorgesehenen Kamera 20 kontinuierlich ein Bild aufgenommen, dies insbesondere zur Gesichtserkennung, darüber hinaus alternativ oder kombinativ hierzu zur Gestenerkennung. Befindet sich ein Benutzer in einem definierten Bildausschnitt und einer definierten Entfernung vor der Küchenmaschine 1, wird das Bild untersucht, im Falle einer Gesichtserkennung das Gesicht extrahiert und mit einer vorher erstellten Gesichterdatenbank F₁ verglichen. Der Vergleich mit der Gesichterdatenbank F₁ ist erreicht mit einem in der Küchenmaschine integrierten Prozessor, wobei die Gesichterdatenbank F₁, wie auch die weiteren Datenbanken bevorzugt in einem nicht flüchtigen Speicher hinterlegt sind.

Ist über die Gesichtserkennung F ein in der Gesichterdatenbank F₁ als Referenzwert hinterlegtes Gesicht erkannt, so kann auch diese Erkennung, wie auch bei der Spracherkennung, zur Übersetzung in einen Maschinenbefehl oder in ein Rezept zur Auswahl aus der Rezeptdatenbank 18 führen.

Wird über die Kamera 20 eine Geste des Benutzers erkannt, beispielsweise Auf- und Abführen einer Hand, Wischen mit der Hand usw., kann dies bevorzugt zu denselben Arbeitsbefehlen wie vorbeschrieben bezüglich der Gesichtserkennung oder Spracherkennung führen.

Befindet sich ein Benutzer in einem definierten Bildausschnitt und Entfernung, wird das aufgenommene Bild untersucht und der Körper des Benutzers beziehungsweise Körperteile, wie Gesicht oder Hände, extrahiert. Befindet sich der Körper der erkannten Person in einer stabilen Position, wird die Gestenerkennung G initialisiert. Die Bewegung beispielsweise einer Hand wird hierbei stetig beobachtet und analysiert. Zur Erkennung wird die Bewegung einer Hand mittels Berechnung von Bewegungsvektoren ermittelt. Dafür eignet sich die Differenz-Bildberechnung, in der in aufeinanderfolgenden Bildern zunächst ein extrahiertes Merkmal (beispielsweise die Hand) bestimmt wird und deren Position in den analysierten Bildern gesucht wird. Stimmt eine Bewegung mit einer vorher definierten Geste der Gestendatenbank G₁ überein, wird die hierfür hinterlegte Funktion der Küchenmaschine 1 ausgeführt, so beispielsweise die Einstellung eines oder mehrerer Parameter, wie Drehzahl, Temperatur oder Zeit, darüber hinaus die Auswahl eines bestimmten Rezeptes aus der Rezeptdatenbank 18.

Die jeweilige Erkennung zur bevorzugt berührungslosen Steuerung der Küchenmaschine 1 - welche bevorzugt neben der üblichen manuellen Steuerung der Küchenmaschine 1 möglich ist - erfordert in einer bevorzugten Ausgestaltung zunächst das Anschalten der Küchenmaschine 1, insbesondere die Aktivierung derselben, beispielsweise über einen Hauptschalter. Alternativ ist die Freischaltung der Küchenmaschine durch einen bestimmten Sprachbefehl und/oder Gestenbefehl und/oder gegebenenfalls durch Erkennen eines bestimmten Gesichts erreichbar. So ist die Küchenmaschine 1 bevorzugt nur insgesamt aktivierbar durch Erfassen eines vorgegebenen Signalwortes oder einer vorgegebenen Geste, wobei sich bevorzugt Signalwort oder Geste von üblichen Worten oder Gesten stark unterscheidet.

Durch eine Gesichtserkennung ist die Freischaltung der Küchenmaschine 1 auf bestimmte Personen einschränkbar.

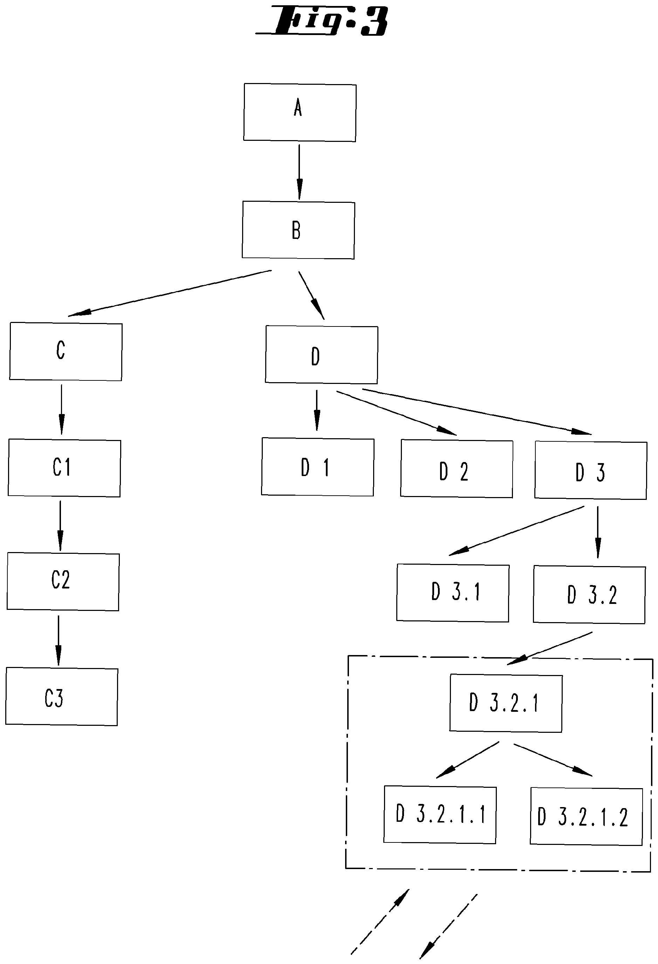

Ausgehend von dieser Freischaltung in Punkt A in Figur 3 ist die Küchenmaschine 1 unter Punkt B wahlweise bedienbar, so zum Einen in üblicher Weise manuell bedienbar, zum Weiteren berührungslos zufolge Gesten- und/oder Gesichts- und/oder Spracherkennung.

Durch ein bestimmtes Befehlswort und/oder eine bestimmte Geste und/oder durch ein mit entsprechendem Parameter belegtes Gesichtbild in der Gesichtsdatenbank können nach Freischaltung der jeweiligen Erkennung die Parameter manuell eingestellt werden (Punkt C), so insbesondere die Drehzahl C₁, die Temperatur C₂ und die Zeitdauer C₃, und/oder die Rezeptdatenbank unter Punkt D aufgerufen werden. Je nach Befehlswort, Gesicht oder Geste sind alle Funktionen freigeschaltet oder stehen nur eingeschränkt zur Verfügung.

Wie weiter aus dem Flussdiagramm in Figur 3 zu erkennen, sind die Rezepte D in stark gefächerten Untermenüs aufgeteilt, so in dem dargestellten Ausführungsbeispiel zunächst unter den Oberbegriffen "Soßen" D1, "Fleisch" D2 und "Backwaren" D3, wobei letzterer Begriff wiederum unterteilt ist in "Kuchen" D3.1 und "Brot" D3.2.

Der Menüpunkt "Brot" bietet unter anderem ein Untermenü "Brötchen" D3.2.1, welches wiederum unterteilt ist beispielsweise in "Weizen-Brötchen" D3.2.1.1 und "Roggen-Brötchen" D3.2.1.2.

Über die Spracherkennung E kann beispielsweise durch die Rezeptdatenbank manövriert werden, so insbesondere zufolge Befehlswort, die den einzelnen Menüpunkten entsprechen (beispielsweise "Rezepte", "Backwaren", "Brot" usw.).

Alternativ kann über die Spracherkennung E auch direkt ein Untermenü aufgerufen werden, beispielsweise durch das Wort "Brötchen", woraufhin dann im Display 11 unmittelbar das Untermenü angezeigt wird.

Weiter alternativ werden die möglichen Untermenüpunkte akustisch, zufolge einer Sprachausgabe angegeben, woraufhin der Benutzer mit entsprechendem Befehlswort reagieren kann. Entspricht das Befehlswort unmittelbar einem nicht sich weiter unterteilenden Untermenü, in dem dargestellten Ausführungsbeispiel beispielsweise "Roggen-Brötchen", so wird das entsprechende Rezept unmittelbar aufgerufen und gegebenenfalls die Parameter für Drehzahl, Temperatur und Zeit eingestellt.

Die Gestenerkennung und die hieraus resultierende Arbeitsroutine der Küchenmaschine 1 ist äquivalent zu der vorbeschriebenen Spracherkennung. Unterschiedliche Gesten, insbesondere mit der Hand, führen zu jeweils der Geste zugehörigen Arbeitsroutinen der Küchenmaschine 1, so beispielsweise zum Aufruf eines bestimmten Rezeptes oder zur Einstellung etwaiger Sonderfunktionen der Küchenmaschine, wie beispielsweise die Rührteigstellung.

Bei Erkennung eines bestimmten Gesichts kann in Abhängigkeit von den zu dem in der Datenbank hinterlegten Vergleichsgesicht zugehörigen Parametern eine Auswahl an Rezepten bis hin zu einem Rezept vorgegeben werden.

Unabhängig davon, ob eine Gestenerkennung, eine Gesichtserkennung, oder eine Spracherkennung nutzbar ist oder genutzt wird oder auch eine Kombination hieraus, ist weiter bevorzugt, dass der registrierte und umzusetzende Befehl zunächst beispielsweise optisch in dem Display 11 oder akustisch durch Sprachausgabe nachgefragt wird. Bei einer Spracherkennung kann der Benutzer hierauf beispielsweise mit ja oder nein reagieren.

Die Einstellung von Drehzahl C₁ und/oder Temperatur C₂ mittels einer Geste und/oder einem Wortbefehl wird in bevorzugter Ausgestaltung nur dann in eine entsprechende Aktion umgesetzt, wenn zudem auch die Zeitdauer C₃ eingestellt wurde. Dies kann manuell erfolgen. Darüber hinaus kann auch eine Nachfrage erfolgen, um den Nutzer aufzufordern, die Zeitdauer noch anzugeben.

Drehzahl, Temperatur und/oder Zeit können bei einer Gestenerkennung beispielsweise durch stetige Aufwärtsbewegung der Hand oder Abwärtsbewegung derselben eingestellt werden.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Küchenmaschine, die dadurch gekennzeichnet ist, dass die Küchenmaschine 1 eine Kamera 20, insbesondere elektronische Kamera, aufweist, welche potenziell in Richtung auf den Benutzer der Küchenmaschine 1 gerichtet ist, und dass eine Gesichtserkennungssoftware sowie eine Gesichterdatenbank F₁ gespeichert sind und dass in Abhängigkeit einer Gesichtserkennung F eine Arbeitsroutine der Küchenmaschine 1 durchführbar ist.

Küchenmaschine, die dadurch gekennzeichnet ist, dass durch die Gesichtserkennung F die Freischaltung der Küchenmaschine 1 erfolgt.

Küchenmaschine, die dadurch gekennzeichnet ist, dass durch die Gesichtserkennung F die Freischaltung einer Sprachsteuerung E und/oder Gestensteuerung G der Küchenmaschine 1 erfolgt.

Küchenmaschine, die dadurch gekennzeichnet ist, dass die Gesichtserkennung F mit Anschalten der Küchenmaschine 1 aktiviert ist.

Küchenmaschine, die dadurch gekennzeichnet ist, dass die Gesichtserkennung F nur durch Ausschalten der Küchenmaschine 1 deaktivierbar ist.

Küchenmaschine, die dadurch gekennzeichnet ist, dass ein Aufheizen und/oder ein Laufen des Rührwerks 5 nur durchgeführt wird, wenn Drehzahl C₁, Temperatur C₂ und Zeitdauer C₃ vorgegeben werden oder auf einen diesbezüglichen Vorschlag der Küchenmaschine 1 hin akzeptiert werden.

**Bezugszeichenliste:**

| | | | |
|---|---|---|---|
| 1 | Küchenmaschine | A | Freigabe |
| 2 | Rührgefäß-Aufnahme | B | Auswahl |
| 3 | Bedienfeld | C | Parametereinstellung |
| 4 | Rührgefäß | C₁ | Drehzahl |
| 5 | Rührwerk | C₂ | Temperatur |
| 6 | Elektromotor | C₃ | Zeitdauer |
| 7 | Widerstandsheizung | D | Rezepte |
| 8 | Haltegriff | D1 | Soßen |
| 9 | Gefäßdeckel | D2 | Fleisch |
| 10 | Netzanschlusskabel | D3 | Backwaren |
| 11 | Display | D3.1 | Kuchen |
| 12 | Drehschalter | D3.2 | Brot |
| 13 | Taste | D3.2.1 | Brötchen |
| 14 | Taste | D3.2.1.1 | Weizen-Brötchen |
| 15 | Taste | D3.2.1.2 | Roggen-Brötchen |
| 16 | Taste | E | Spracherkennung |
| 17 | Taste | E₁ | Befehlsdatenbank |
| 18 | Rezeptdatenbank | F | Gesichtserkennung |
| 19 | Schallwandler | F₁ | Gesichtsdatenbank |
| 20 | Kamera | G | Gestenerkennung |
| | | G₁ | Gestendatenbank |

## Patentansprüche

1. Elektrisch betriebene Küchenmaschine (1) mit einem Rührgefäß (4) und einem Rührwerk (5) in dem Rührgefäß (4), **dadurch gekennzeichnet, dass** die Küchenmaschine (1) eine Kamera (20), insbesondere elektronische Kamera, aufweist, welche potenziell in Richtung auf den Benutzer der Küchenmaschine (1) gerichtet ist, und dass eine Gesichtserkennungssoftware sowie eine Gesichterdatenbank (F₁) gespeichert sind und dass in Abhängigkeit einer Gesichtserkennung (F) eine Arbeitsroutine der Küchenmaschine (1) durchführbar ist, wobei durch die Gesichtserkennung (F) die Freischaltung einer Sprachsteuerung (E) der Küchenmaschine (1) erfolgt und/oder wobei durch die Gesichtserkennung (F) die Freischaltung einer Gestensteuerung (G) der Küchenmaschine (1) erfolgt.

2. Küchenmaschine nach Anspruch 1, **dadurch gekennzeichnet, dass** durch die Gesichtserkennung (F) die Freischaltung der Küchenmaschine (1) erfolgt.

3. Küchenmaschine nach einem der vorhergehenden Ansprüche, **dadurch gekennzeichnet, dass** die Gesichtserkennung (F) mit Anschalten der Küchenmaschine (1) aktiviert ist.

4. Küchenmaschine nach einem der vorhergehenden Ansprüche, **dadurch gekennzeichnet, dass** die Gesichtserkennung (F) nur durch Ausschalten der Küchenmaschine (1) deaktivierbar ist.

5. Küchenmaschine nach einem der vorhergehenden Ansprüche, **dadurch gekennzeichnet, dass** ein Aufheizen und/oder ein Laufen des Rührwerks (5) nur durchgeführt wird, wenn Drehzahl (C₁), Temperatur (C₂) und Zeitdauer (C₃) vorgegeben werden oder auf einen diesbezüglichen Vorschlag der Küchenmaschine (1) hin akzeptiert werden.

## Claims

1. An electrically operated food processor (1) with a mixing bowl (4) and a mixer (5) in the mixing bowl (4), **characterized in that** the food processor (1) encompasses a camera (20), in particular an electronic camera, which is potentially directed towards the user of the food processor (1), and that a face recognition software as well as a face data bank (F₁) are stored and that face recognition (F) can be used to cause the food processor (1) to carry out a routine task, wherein the face recognition (F) activates a speech control (E) of the food processor (1) and/or the face recognition (F) activates a gesture control (G) of the food processor (1).

2. The food processor according to claim 1, **characterized in that** the face recognition (F) activates the food processor (1).

3. The food processor according to one of the preceding claims, **characterized in that** the face recognition (F) is activated by turning on the food processor (1).

4. The food processor according to one of the preceding claims, **characterized in that** the face recognition (F) can be deactivated only by turning off the food processor (1).

5. The food processor according to one of the preceding claims, **characterized in that** a heating and/or a running of the mixer (5) is carried out only when speed (C₁), temperature (C₂) and duration (C₃) are provided or are accepted in response to a corresponding suggestion from the food processor (1).

## Revendications

1. Robot de cuisine électrique (1) avec un récipient de mélange (4) et un agitateur (5) dans le récipient de mélange (4), **caractérisé en ce que** le robot de cuisine (1) comprend une caméra (20), en particulier une caméra électronique laquelle est dirigée potentiellement dans la direction de l'utilisateur du robot de cuisine (1), et **en ce qu'**un logiciel de reconnaissance faciale, ainsi qu'une base de données faciales (F₁) sont stockés, et qu'une routine de travail du robot de cuisine (1) est exécutable en fonction d'une reconnaissance faciale (F), dans lequel une commande vocale (E) du robot de cuisine (1) est activée par la reconnaissance faciale (F) et/ou dans lequel une commande gestuelle (G) du robot de cuisine (1) est activée par la reconnaissance faciale (F).

2. Robot de cuisine selon la revendication 1, **caractérisé en ce que** le robot de cuisine (1) est activé par la reconnaissance faciale (F).

3. Robot de cuisine selon l'une des revendications précédentes, **caractérisé en ce que** la reconnaissance faciale (F) est activée par la mise en marche du robot de cuisine (1).

4. Robot de cuisine selon l'une quelconque des revendications précédentes, **caractérisé en ce que** la reconnaissance de visage (F) ne peut être désactivée que par la mise à l'arrêt du robot de cuisine (1).

5. Robot de cuisine selon l'une des revendications précédentes, **caractérisé en ce qu'**un chauffage et/ou un fonctionnement de l'agitateur (5) interviennent uniquement si la vitesse de rotation (C₁), la température (C₂) et la durée (C₃) sont définies ou acceptées suite à une proposition les concernant du robot de cuisine (1).
